# EUROPEAN PATENT APPLICATION

(11) **EP 4 848 223 A1**
(43) Date of publication of application: **02.12.2026**
(21) Application number: 25305785.5
(22) Date of filing: 30.05.2025
(51) Int. Cl.: G06V 10/764, G06V 10/80, G06V 10/82, G06V 20/40, G06V 20/56, G06V 40/10, G06V 40/20

(54) **A COMPUTER-IMPLEMENTED METHOD FOR IDENTIFYING A MOVEMENT ASSOCIATED WITH A DYNAMIC ELEMENT APPEARING IN A VIDEO SEQUENCE**

(71) Applicant: TOYOTA JIDOSHA KABUSHIKI KAISHA, Toyota-shi, Aichi-ken 471-8571 (JP); Institut National de Recherche en Informatique et en Automatique, 78153 Le Chesnay Cedex (FR)
(72) Inventor: FRANCESCA, Gianpiero, 1140 Brussels (BE); GARATTONI, Lorenzo, 1140 Brussels (BE); YANG, Di, 06902 VALBONNE (FR); ALI, Mahmoud, 06902 Valbonne (FR); BREMOND, François, 06902 Valbonne (FR); KONG, Quan, Chuo-ku - Tokyo, 103-0022 (JP)
(74) Representative: Cabinet Beau de Loménie

(57) **Abstract**

A computer-implemented method (20) for identifying at least one movement associated with at least one dynamic element appearing in a video sequence, the computer-implemented method (20) comprising an extraction step (21) of data combining visual and motion features, said data being associated with a temporal evolution of said at least one dynamic element in the video sequence; and a classification step (23) of the at least one movement among a predefined set of movement types, based on said data.

## Description

### BACKGROUND OF THE INVENTION

### 1. Field of the invention

The present disclosure relates to the field of recognition systems and, more particularly, to an apparatus and a computer-implemented method for identifying at least one movement associated with at least one dynamic element appearing in a video sequence.

### 2. Description of Related Art

The ability to automatically identify and interpret motion patterns of humans or objects in video streams is of growing importance across numerous fields, ranging from surveillance and robotics to automotive safety and human-computer interaction. In essence, understanding "what is moving, how, and when" is a requirement for enabling machines to make context-aware decisions based on visual input.

In the automotive domain in particular, such capabilities are becoming essential to meet the evolving demands of intelligent vehicles and driver monitoring systems. Cameras installed inside the cabin or facing the road are no longer used solely for recording purposes, but instead function as active perception systems that support real-time decision-making. For instance, the need to detect whether a driver is falling asleep or performing secondary tasks (e.g., eating, texting, reaching for objects),

Beyond the vehicle context, motion recognition plays a key role in video surveillance (e.g., identifying suspicious activity), workplace safety (e.g., detecting falls or unsafe gestures near machines), and interactive systems (e.g., gesture-based control, AR/VR environments). In all these cases, the central challenge is to reliably detect and classify human actions or object movements from visual data in a way that is both accurate and temporally aware.

Traditional computer vision systems typically rely on either :
- Visual features, extracted from raw RGB frames using convolutional neural networks (CNNs) or vision transformers. These models capture rich appearance based information, such as color, texture, object shape, and spatial context.
- Motion features, most commonly in the form of pose data, which represents the 2D or 3D position of key anatomical joints (e.g., elbows, knees, shoulders) over time.

Each modality represents benefits and limitations. Visual features provide rich context but are often sensitive to lighting conditions, occlusions, background clutter, and camera viewpoint. For example, in a vehicle cabin with variable sunlight and reflective surfaces, CNN-based recognition models may underperform. On the other hand, pose estimation yields compact and semantically meaningful representations of body movement, but tends to suffer from instability or accuracy in the presence of partial occlusions, fast motion, or atypical body configurations.

In practice, relying exclusively on one more modality is insufficient for robust and context sensitive action recognition. For instance, a person turning their head and extending their arm may be adjusting a mirror or reaching for a water bottle - the motion is similar, but the object context and posture dynamics distinguish the actions. Another example, two individuals are in a shared vehicle may perform overlapping or similar motions (e.g., leaning forward), but only one may be interacting with the vehicle's controls.

Moreover, human actions are not instantaneous; they evolve over time, often spanning multiple frames and involving subtle changes in posture, motion speed, or spatial interaction. Recognizing such actions requires not only identifying relevant features at each instant but also modeling their temporal evolution to capture trends and dependencies.

Despite recent advances in human action recognition, most existing methods still face major limitations that reduce their effectiveness, especially in realistic and complex scenarios. For instance, may current systems try to use both visual information (from RGB video frames) and motion information (like skeleton movements or optical flow). However, they usually combine these two types of data in a simple way - often just by concatenating features or processing them in separate, parallel branches before merging. This type of fusion does not allow the model to learn the meaningful relationship between how something looks (appearance) and how it moves (motion). For example, raising a hand could mean waving, pointing, or stretching - and understanding the difference requires looking at both motion and the context (scene, body orientation, etc.) together, not separately. As a result, the model might miss important patterns or confuse similar actions because it does not understand how appearance and movement interact over time.

Additionally, many existing systems rely on fixed-size windows (e.g., analyzing only 2 or 5 seconds of video at a time), or basic networks which have limited memory and can forget earlier events. These approaches are often too rigid to handle actions that least longer than expected. They also struggle with long-term dependencies, such as when the key part of an action happens several seconds before the result. Thus, these models lack the ability to adapt to the true duration of each action and to link distant events in the video, which is critical for accurate recognition.

Finally, people often do more than one thing at a time. For example, someone can be walking and talking, or opening a door while turning around. But many existing systems are designed to predict only one label per frame or per segment of video as if only one action can occur at a time. This is an important limitation because it forces the model to choose one action and ignore others, even if multiple actions are clearly happening. Even when multi-label prediction is supported, it is often added in a simple way (e.g., by using a threshold to decide which labels to keep), without learning relationships between actions -such as which ones tend to happen together or which are mutually exclusive. This makes it difficult for these systems to correctly represent real human behavior, especially in dynamic environments.

Therefore, there is a need to accurately recognize actions as they evolve over time, especially in long videos where actions may depend on earlier context. In other words, there is a need for action recognition systems and methods that can track and interpret movements dynamically over time, rather relying on fixed or short-term temporal windows for example.

### SUMMARY

The object of the present invention is to at least substantially remedy the above-mentioned drawbacks. In this respect, the aim of the invention is to provide a computer-implemented method for identifying at least one movement associated with at least one dynamic element appearing in a video sequence, the computer-implemented method comprising an extraction step of data combining visual and motion features, said data being associated with a temporal evolution of said at least one dynamic element in the video sequence; and a classification step of the at least one movement among a predefined set of movement types, based on said data.

The term "computer-implemented method" indicates that all steps of the method are executed by computing device or systems comprising one or more processors, such as CPUs, GPUs, or embedded systems. The method can thus be deployed in diverse environments, including assistive robotics, smart homes, and workplace monitoring.

The invention addresses fundamental limitations of existing systems by introducing a structured approach that combines appearance-based and motion-based information across time.

In this method, a video sequence is processed to detect at least one dynamic entity - typically a human being - whose motion is to be analyzed. Once the subject is identified, the system extracts a set of features that reflect both its visual characteristics (e.g., spatial layout, textures, and color information) and its temporal dynamics (e.g., motion trajectories or pose evolution). These features are not considered in isolation but are captured in a way that reflects how the subject evolves temporally in the video sequence, thus allowing for temporal context.

The extracted features are then jointly analyzed in a classification stage, during which the method determines the nature of the movement performed by the subject (the dynamic element). This decision is made by comparing the fused visual-motion representation against a set of predefined movement types, which may include, for example, walking, sitting, turning, or manipulating an object. The classification may involve either single-label or multi-label output, depending whether the subject is performing one or multiple movements simultaneously.

A key advantage of performing this method lies in its ability to integrate appearance and motion cues in a temporally aware manner, rather than treating them as separate and uncorrelated streams. Accordingly, the method provides more accurate and context-sensitive recognition of human actions, especially in real-world scenarios where movements may be subtle, occluded, or context-dependent. For instance, the same gesture may correspond to different meanings depending on body orientation or the object being manipulated. The method thus enables this understanding by constructing a joint feature space that reflects the interaction between visual structure and motion behavior as it unfolds over time.

Optionally, the visual features are extracted from a plurality of consecutive frames of the video sequences.

In certain embodiments, the visual features are extracted from a plurality of consecutive frames of the video sequences, rather than from individual frames in isolation. This allows capturing not only spatial characteristics of the dynamic element, such as shape, texture, or bodying configuration, but also short-term temporal variations that may occur over a local sequence of frames.

An advantage of extracting the visual features from a plurality of consecutive frames of the video sequences, is to enable better representation of gradual posture transitions, such as standing up or turning around, where individual frames may not be sufficient to disambiguate intermediate states.

Optionally, the motion features comprise pose data representing the positions of skeletal joints over time.

The goal of this feature stream is to capture the structural movement dynamics of the element in an abstract form, rather than relying solely on pixel-based motion cues such as optical flow.

The motion features used in the method comprise for example pose data, which represent the positions of key skeletal joints of a person (or object), tracked over time throughout the video sequence. This pose data provides a structured way to describe how the subject moves, independent of visual appearance.

To obtain this data, a pose estimation model can be applied to each frame of the video. This model detects key points on the body/object. For each frame, the method records the 2D or 3D coordinates of these joints and when these joint positions are collected over a series of frames, they form a temporal sequence that describes the subject's movement, joint by joint, across time. This representation is advantageous as it is less sensitive to variations in lighting, clothing, or camera angle, especially when people may be partially occluded.

Optionally, the combined data are generated by projecting the motion features onto an orthogonal basis derived from the visual features.

In certain embodiments, the method includes a specific way to combine the visual and motion features: by projecting the motion features onto an orthogonal basis that is computed from the visual features. In other words, instead of simply adding or concatenating the two types of features, the system transforms the motion data so that it is aligned with the structure of the visual information.

This can be done by first analyzing the visual features -such as the shape, posture, and texture of the person - to generate a set of reference directions in the feature space. The motion features -such as joint positions and their changes over time- are then mathematically projected onto this basis. This means that the system keeps only the parts of the motion that is relevant in the visual context. By projecting the motion into the space defined by the visual features, the method better captures the subtle interactions.

Optionally, said temporal evolution of the combined data is modeled using a Transformer network and a temporal convolutional neural network.

In other words, once the features have been extracted and fused, the method processes them over time to better understand how the movement unfolds from one frame to the next.

The Transformer is used to capture long-term dependencies in the video. Thanks to its attention mechanism, it can relate events that are far apart in time. For example, it can link the initial step of standing up with the final upright posture several seconds later. This is useful for detecting actions that develop slowly.

The temporal convolutional neural network (TCN), on the other hand, is used to detect shorter, more local patterns in the sequence - for instance, the way the arm swings over a few frames.

By combining both architectures, the method can understand movement at multiple time scales as the TCN provides fine-grained timing, while the Transformer ensures that the global context is not lost.

Optionally, said at least one dynamic element comprises one or more persons detected in the video sequence.

Optionally, a sliding window is applied to the video sequence to define temporal segments from which the visual and motion features are extracted.

Instead of processing the entire video at once, the method moves a fixed-size window (e.g. covering 16, 32 or 64 frames) across the timeline of the video, typically with a defined stride (e.g., advancing 4 or 8 frames at a time).

The sliding window brings several benefits as it enables continuous analysis of long video streams by processing one segment at a time, making it suitable for real-time or streaming applications. The windows help also to capture transitions between actions, ensuring that important movement cues that occur at window boundaries are not missed.

Optionally, the predefined set of movement types comprises at least one of sitting, standing up, walking, turning, or manipulating an object.

Optionally, the classification step comprises assigning, for each frame of the video sequence, one or more movement types selected from the predefined set, using a multi-label classification model.

The predefined set of movement types is not limited to sitting, standing up, walking, turning, or manipulating an object. These categories represent common human actions than can be observed in many real-world contexts, such as indoor surveillance, human-robot interaction, healthcare monitoring, or industrial safety systems.

Optionally, the computer-implemented method further comprises a step of storing, as historical data, a history of visual and/or motion features extracted from one or more earlier portions of the video sequence.

Instead of discarding features after they are used for classification in the current time window for example, the method retains selected information from past frames or windows in memory, such as in a buffer, a temporal cache, or a dedicated long-term storage module. This memory can be implemented using standard memory management techniques for example.

Optionally, the historical data are combined with the extracted data during the classification step.

The purpose of this historical data is to provide the system with temporal context beyond the current observation window. By having access to past movements or visual states, the model can better recognize actions that depend on what happened earlier - for example, distinguishing between a person who is about to sit down versus one who is getting up, or detecting that someone is returning to a task they started moments ago.

The use of historical data enhances the method ability to handle longer actions, delayed transitions, and temporally dependent behaviors, which are often missed by models limited to short-term inputs.

The present disclosure further relates to an apparatus for identifying at least one movement associated with at least one dynamic element appearing in a video sequence, comprising:
- an extracting module configured to extract data combining visual and motion features associated with a temporal evolution of said at least one dynamic element in the video sequence; and
- a classifying module configured to classify the at least one movement among a predefined set of movement types, based on said data.

The apparatus referred to hereinafter as the identifying apparatus, may be configured to carry out the above-mentioned method (referred to hereinafter as the identifying method) and may have part or all of the above-described features. The identifying apparatus may have the hardware structure of a computer.

The present disclosure further relates to a computer program set including instructions for executing the steps of the computer-implemented method defined above when said program set is executed by at least one computer.

This program set can use any programming language and take the form of source code, object code, or a code intermediate between source code and object code, such as a partially compiled form or any other desirable form.

The present disclosure further relates to a recording medium readable by at least one computer and having recorded thereon at least one computer program including instructions for executing the steps of the computer-implemented method described above.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a block diagram of an identifying apparatus according to an embodiment of the present disclosure; and
- FIG.2 is a flowchart of an identifying method according to an embodiment of the present disclosure.

### DETAILED DESCRIPTION OF EMBODIMENTS

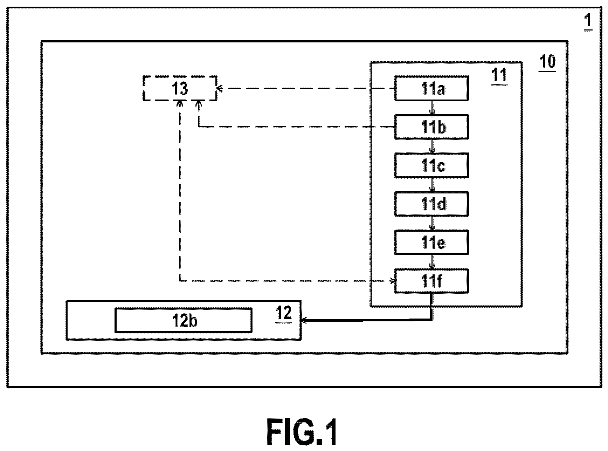

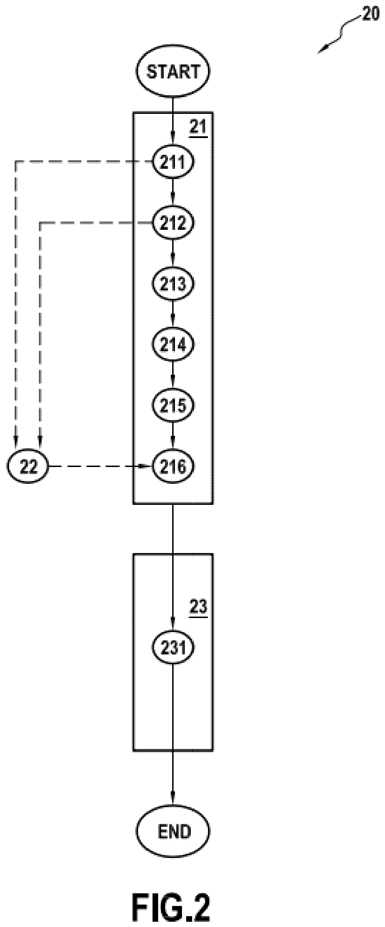

Figure 1 shows a block diagram of an identifying apparatus 10 comprising an extracting module 11 and a classifying module 12. The tasks carried out by the identifying apparatus 10 are also detailed hereinafter with respect to the corresponding identifying method 20, an embodiment of which is illustrated in Fig. 2.

The identifying apparatus 10 may be located inside a vehicle 1 which may be, without limitation, an autonomous or semi-autonomous vehicle. Such vehicle 1 may be directed to an apparatus capable of transporting people or objects from one location to another, such as a car or a motorcycle, and may be categorized into different levels based on the extent of automation and human involvement in the driving tasks.

Alternatively, the identifying apparatus 10 may be partially located outside the vehicle 1. As a first example, functions of the extracting module 11 or the classifying module 12 are executed via cloud computing. As a second example, only functions of the classifying module 12 are executed via cloud computing. Accordingly, the functions of the extracting module 11 are executed inside the vehicle 1.

The identifying apparatus 10 may be configured to identify at least one movement associated with at least one dynamic element appearing in a video sequence. For example, the identifying apparatus 10 may be used in an automotive context to monitor occupants in a vehicle cabin and detect actions such as reaching, turning, or interacting with vehicle controls. However, the identifying apparatus 10 is not limited to such applications. It may also be employed in smart homes for activity monitoring, in healthcare environments for fall detection, or in industrial settings for gesture recognition and worker safety monitoring.

The identifying apparatus 10 may comprise an electronic circuit, a processor (shared, dedicated, or group), a combinational logic circuit, a memory that executes one or more software programs, and/or other suitable components that provide the described functionality. In other words, the identifying apparatus 10 may be a computer device. The identifying apparatus 10 may be connected to a memory, which may store data, e.g., at least one computer program, which, when executed, carries out the identifying method according to the present disclosure.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk. Alternatively, the memory can be an integrated circuit in which the program is incorporated, the circuit being adapted to execute the identifying method or to be used in its execution.

The extracting module 11 is configured to extract data combining visual and motion features, each (visual and motion features) being associated with a temporal evolution of said at least one dynamic element in the video sequence. Accordingly, a first step 21 of the identifying method 20 is carried out by the extracting module 11 and comprises extracting such data combining said visual and motion features associated with a temporal evolution of said at least one dynamic element in the video sequence.

Said dynamic element may comprise one or more persons detected in the video sequence. However, the dynamic element may also include other moving objects such as robotic arms or mobile equipment. The identification of dynamic elements may rely on object detection or tracking subsystem that isolates individual subjects of interest and enables their visual and motion features to be captured independently.

The extracting module 11 comprises a visual feature extraction submodule 11a configured to extract the visual features of at least one dynamic element from the video sequence. The visual features are associated with the temporal evolution of the dynamic element in the video sequence.

The visual feature extraction submodule 11a may also be configured to extract the visual features from a plurality of consecutive frames of the video sequence. This enables the extracting module 11 to capture appearance variations and local temporal patterns by observing how the visual characteristics of the subject change over short intervals of time. These features may be extracted using 3D convolutional neural networks, video transformers, or other spatiotemporal encoders capable of processing such sequence of frames.

Accordingly, the first step 21 of the identifying method 20 comprises a sub-step 211 carried out by the visual feature extraction submodule 11a, which comprises extracting the visual features of the at least one dynamic element from the video sequence. The step 211 may also comprises extracting the visual features from a plurality of consecutive frames of the video sequence.

The extracting module 11 further comprises a motion feature extraction submodule 11b configured to extract the motion features from the video sequence associated with a temporal evolution of the at least one dynamic element in the sequence video. Accordingly, the first step 21 of the identifying method 20 comprises a sub-step 212 carried out by the motion feature extraction submodule 11b, which comprises extracting the motion features from the video sequence associated with the temporal evolution of the at least one dynamic element in the sequence.

The visual features are extracted from a sequence of consecutive frames, allowing capturing short-term variations in appearance, such as changes in posture, object interaction, or scene context. The motion features are constructed, for example, by tracking skeletal joint positions over multiple frames, thereby forming a temporal sequence that encodes the subject's movement dynamics. Accordingly, both the visual and motion features are associated with the temporal evolution of the dynamic element. This dual temporal association enables the identifying apparatus 10 to jointly model how the subject looks and moves over time, rather than at isolated time points.

To this end, a sliding window may be applied to the video sequence to define temporal segments from which the visual and motion features are extracted. The sliding window mechanism enables localized feature extraction by moving a fixed-size window across the timeline of the video with a defined stride. This allows the identifying apparatus 10 to process long video sequences incrementally while maintaining temporal coherence, and ensures that transitions between different actions are captured even when they span across window boundaries.

The video sequence is divided into a series of temporal segments v, wherein each segment v consists of a sequence of consecutive frames. Accordingly, for each segment v, the visual feature extraction submodule 11a is configured to extract concatenated per-frame visual features fᵥ as in Eq. 1: ${f}_{v} = {E}_{V} \left(v\right) .$ (1) where ${f}_{v} ∈ {ℝ}^{Cv \times T}$ and T denotes the number of frames in the processed window to extract the video segments.

To extract the motion features from a skeleton sequence m, the motion feature extraction submodule 11b is configured to process skeleton sequences as spatio-temporal matrices, denoted as $m ∈ {ℝ}^{Cin \times T \times M \times D}$, where T is the number of frames in the processed window, D = J + K, which includes two subspaces : subspace of size J, initialized as 2D/3D coordinates, for all key joints features, and subspace of size K, initialized as 0, for representing the additive subspace for encoding projected visual features, Cᵢₙ is the input channels, Cᵢₙ = 2 for 2D data and Cᵢₙ = 3 for 3D skeletons. M denotes the number of subject(s) extracted in the segment.

These motion features may be extracted using temporal convolutional neural networks or graph-based encoders for example.

The skeleton sequence is then represented as a spatio-temporal feature map ${f}_{m} ∈ {ℝ}^{Cm \times T \times M \times D}$ where Cₘ is the channel size of the feature map.

The extracting module 11 further comprises a feature fusion submodule 11c configured to project the motion features onto an orthogonal basis derived from the visual features, in order to create a semantically aligned representation of the combined data. Accordingly, the first step 21 of the identifying method 20 comprises a sub-step 213 carried out by the feature fusion submodule 11c, which comprises projecting the motion features onto an orthogonal basis derived from the visual features.

This projection operation allows the motion features to be represented in a feature space that reflects the semantic content of the visual stream. Accordingly, it enhances the compatibility between appearance and motion data.

To this end, the feature fusion submodule 11c is configured to define the orthogonal basis Q as Q = (d₁, d₂, ..., d_{K}) to represent the additive projection space for motion-visual features, where K ∈ [1, D), and $d ∈ {ℝ}^{1 \times D}$. $\left〈{d}_{i}, {d}_{j}\right〉 = \left\{\begin{matrix}0 & i \neq j \\ 1 & i \neq j .\end{matrix}\right.$ (2)

Due to Q entailing an orthogonal basis, any two directions dᵢ, dⱼ follow the constraint in Eq. 2.$Q ∈ {ℝ}^{K \times D}$ is implemented as a learnable matrix based on the publication: Di Yang, Yaohui Wang, Antitza Dantcheva, Lorenzo Garattoni, Gianpiero Francesca, and Francois Bremond. Unik: A unified framework for real-world skeleton-based action recognition. In BMVC, 2021*.*

Gram-Schmidt algorithm is applied during each forward pass to satisfy the orthogonality.

In each forward pass, the Gram-Schmidt process generates an orthogonal set, Q, that spans the same D-dimensional space. The motion features are then mixed by a linear combination of this basis Q and the associated magnitudes A, which are weighted from the visual features fᵥ. The vision-mixed features, denoted as ${f}_{mv} ∈ {ℝ}^{Cm \times T \times M \times D}$ can be obtained following Eq. 3 : ${r}_{mv} = {f}_{m} + A \times Q = {f}_{m} + {E}_{ϵ} \left({f}_{v}\right) \times Q ,$ (3) where E_{ε} is an MLP (Multi-Layer Perception) layer followed by a reshape layer to transform ${f}_{v} ∈ {ℝ}^{Cv \times T}$ to $A = {E}_{E} \left({f}_{v}\right) ∈ {ℝ}^{Cm \times T \times M \times K}$.
The extracting module 11 further comprises a multi-head attention submodule 11d that is configured to extract the interaction of motion and objects on top of ᵣₘᵥ, denoted as r'ₘᵥ ∈ ${ℝ}^{Cm \times T \times M \times D}$ as outlined in Eq. 4 : ${r}_{mv}^{′} = {\sum }_{i = 1}^{H} {r}_{mv} \times {W}_{i} ,$ (4) where the H is the number of attention heads and Wᵢ is the self-attention weights learned as following: ${W}_{i} = Softmax \left(\left({E}_{θi}^{T}⋅{r}_{mv}\right)\times \left({E}_{ϕi}⋅{r}_{mv}\right)\right) .$ (5) where E_{θi} and E_{ϕi} are the 1 x 1 convolutional weights for channel transformation.

Accordingly, the multi-head attention submodule 11d is configured to operate on the fused features r^{mv} resulting from the projection-based fusion. Accordingly, the first step 21 of the identifying method 20 comprises a sub-step 214 carried out by the multi-head attention module 11d, which comprises extracting the interaction of motion and objects on top of of ᵣₘᵥ, denoted as $r {′}_{mv} ∈ {ℝ}^{Cm \times T \times M \times D}$ as outlined in the above Eq. 4.

The extracting module 11 may also include a multi-subject feature pooling submodule 11e, configured to process the attention-enhanced features r'^{mv} across multiple dynamic elements (e.g. persons) present in the video sequence. When multiple subjects are detected simultaneously, the submodule 11e aggregates the corresponding features along the subject dimension (dimension M) in order to capture interaction effects between subjects. Accordingly, the first step 21 of the identifying method 20 comprises a sub-step 215 carried out by the feature pooling submodule 11e, which comprises processing the attention-enhanced features r'^{mv} across multiple dynamic elements (e.g. persons) present in the video sequence.

The multi-subject interaction is formulated as in Eq. 6 : ${f}_{mv} = {E}_{γ} \left({r}_{mv}^{′}\right) ,$ (6) where E _{Y} operation performs linear combination and spatial pooling of the features r'^{mv}. The resulting output is a compact representation that encodes contextual information shared or exchanged between the different dynamic elements in the video sequence.

The classifying module 12 comprises a temporal modeling submodule 121a configured to process the fused features over time (duration of the video sequence) using a Transformer network and a Temporal Convolutional Network (TCN). The Transformer captures long-term dependencies, while the TCN identifies short-term motion patterns. This dual modeling strategy enables to classifying module 12 to recognize actions with varying durations and temporal structures, including those composed of multiple sequential sub-actions.

The identifying apparatus 10 optionally comprises historical feature storage module 13, configured to store, as historical data, past extracted visual and/or motion features from one or more earlier portions of the video sequence, for later use in the classification step (step 23 of the identifying method 20). This stored data provides the identifying apparatus 10 with extended temporal context and supports recognition of longer actions or temporally distributed behavior patterns. The historical feature storage module 13 may include memory buffers or queues that store feature vectors over a configurable time span. Accordingly, the identifying method 20 comprises an optional second step 22 carried out by the historical feature storage module 13, which comprises storing, as historical data, past extracted visual and/or motion features from one or more earlier portions of the video sequence, for later use by a third step 23 of the identifying method 20.

The stored history features (data) are defined as ${f}_{h} ∈ {ℝ}^{Cv \times T}$.

Accordingly, the extracting module 11 may comprise a temporal modeling submodule 11f configured to process the fused features over time with the historical data using a Transformer network and a Temporal Convolutional Network (TCN). To this end, the first step 21 comprises a substep 216 carried out by the temporal modeling submodule 11f, which comprises processing the fused features over time with the historical data using the Transformer network and the Temporal Convolutional Network (TCN).

The stored history features fₕ are concatenated with the motion-visual features fₘᵥ across the spatial dimension as expressed in Eq. 7 : ${f}_{mvh} = TM \left(concat\left[{f}_{mv}, {f}_{h}\right]\right) ,$ (7) where TM represents an alternating series of Transformer and TCN layers. This produces multi-modal features $fmvh ∈ {ℝ}^{\left(Cv\times Cm\right) \times T}$.

The classifying module 12 is configured to classify the at least one movement among a predefined set of movement types, based on said data (fₘᵥₕ or fₘᵥ : depending on whether historical features are incorporated or not) which refers to the fused visual and motion features extracted and temporally modeled for the at least one dynamic element. Accordingly, the identifying method 20 comprises a third step 23 comprising classifying the at least one movement among a predefined set of movement types, based on said data. The third step 23 is carried out by the classifying module 12.

The classifying module 12 further comprises a multi-label classifier submodule 12b configured to assign, for each frame of the video sequence, one or more movement types selected from the predefined set, using a multi-label classification model. Accordingly, it allows the classifying module 12 to handle overlapping or concurrent actions, such as a subject reaching while walking or turning while interacting with an object. The multi-label classifier submodule 12b may output probabilities or binary indicators for each movement class. Accordingly, the third step 23 comprises a substep 231 carried out by the multi-label classifier submodule 12b, which comprises assigning, for each frame of the video sequence, one or more movement types selected from the predefined set, using said multi-label classification model.

For example, the multi-label classifier submodule 12b may be configured to generate action prediction scores denoted by $P ∈ {ℝ}^{Cls \times T}$, wherein T is the number of frames, Cls is the number of movement types in the predefined set.

A binary Cross Entropy (BCE) loss function may be used during training to supervise the multi-label classification task. $L = - \frac{1}{T} {\sum }_{t = 1}^{T} {\sum }_{c = 1}^{Cls} \left[{y}_{tc}log {P}_{tc}+\left(1-{y}_{tc}\right)log\left(1-{P}_{tc}\right)\right] ,$ (8) wherein y represents the ground truth.
The BCE encourages the classifier to produce accurate frame-level action indicators for each movement type independently. This loss function is suitable for recognizing overlapping or concurrent actions in untrimmed video sequences.

It should be noted that the first step 21 and the third step 23 are consecutive steps. The second step 22 is optional which can be performed in parallel of substeps 211 and 212. It should be also noted that the substeps 211 and 212 can be performed in parallel or in sequence (substep 211 before step 212). Substeps 213, 214, 215, 216, 231 are also performed in sequence, noting that substep 213 is performed after substep 212 (or 211 if substeps 211 and 212 are performed in parallel).

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method (20) for identifying at least one movement associated with at least one dynamic element appearing in a video sequence, the computer-implemented method (20) comprising an extraction step (21) of data combining visual and motion features, said data being associated with a temporal evolution of said at least one dynamic element in the video sequence; and a classification step (23) of the at least one movement among a predefined set of movement types, based on said data.

2. The computer-implemented method (20) according to claim 1, wherein the visual features are extracted from a plurality of consecutive frames of the video sequence.

3. The computer-implemented method (20) according to claim 1 or 2, wherein the motion features comprise pose data representing the positions of skeletal joints over time.

4. The computer-implemented method (20) according to any one of claims 1 to 3, wherein the combined data are generated by projecting (213) the motion features onto an orthogonal basis derived from the visual features.

5. The computer-implemented method (20) according to any one of claims 1 to 4, wherein said temporal evolution of the combined data is modeled (216) using a Transformer network and a temporal convolutional neural network.

6. The computer-implemented method (20) according to any one of claims 1 to 5, wherein said at least one dynamic element comprises one or more persons detected in the video sequence.

7. The computer-implemented method (20) according to any one of claims 1 to 6, wherein a sliding window is applied to the video sequence to define temporal segments from which the visual and motion features are extracted.

8. The computer-implemented method (20) according to any one of claims 1 to 7, wherein the predefined set of movement types comprises at least one of sitting, standing up, walking, turning, or manipulating an object.

9. The computer-implemented method (20) according to any one of claims 1 to 8, wherein the classification step (23) comprises assigning (231), for each frame of the video sequence, one or more movement types selected from the predefined set, using a multi-label classification model.

10. The computer-implemented method (20) according to any one of claims 1 to 9, further comprising a step of storing (22), as historical data, a history of visual and/or motion features extracted from one or more earlier portions of the video sequence.

11. The computer-implemented method (20) according to claim 10, wherein the historical data are combined with the extracted data during the classification step (23).

12. An apparatus (10) for identifying at least one movement associated with at least one dynamic element appearing in a video sequence, comprising:
- an extracting module (11) configured to extract data combining visual and motion features associated with a temporal evolution of said at least one dynamic element in the video sequence; and
- a classifying module (12) configured to classify the at least one movement among a predefined set of movement types, based on said data.

13. A computer program set including instructions for executing the steps of the computer-implemented method (20) of any one of claims 1 to 11 when said program set is executed by at least one computer.

14. A recording medium readable by at least one computer and having recorded thereon at least one computer program including instructions for executing the steps of the computer-implemented method (20) of any one of claims 1 to 11.

## Amended claims

### Amended claims in accordance with Rule 137(2) EPC.

1. A computer-implemented method (20) for identifying at least one movement associated with at least one dynamic element appearing in a video sequence, the computer-implemented method (20) comprising an extraction step (21) of data combining visual and motion features, the motion features comprising pose data representing the positions of skeletal joints over time, said data being generated by projecting (213) the motion features onto an orthogonal basis derived from the visual features and being associated with a temporal evolution of said at least one dynamic element in the video sequence; and a classification step (23) of the at least one movement among a predefined set of movement types, based on said data.

2. The computer-implemented method (20) according to claim 1, wherein the visual features are extracted from a plurality of consecutive frames of the video sequence.

3. The computer-implemented method (20) according to any one of claim 1 or 2, wherein said temporal evolution of the combined data is modeled (216) using a Transformer network and a temporal convolutional neural network.

4. The computer-implemented method (20) according to any one of claims 1 to 3, wherein said at least one dynamic element comprises one or more persons detected in the video sequence.

5. The computer-implemented method (20) according to any one of claims 1 to 4, wherein a sliding window is applied to the video sequence to define temporal segments from which the visual and motion features are extracted.

6. The computer-implemented method (20) according to any one of claims 1 to 5, wherein the predefined set of movement types comprises at least one of sitting, standing up, walking, turning, or manipulating an object.

7. The computer-implemented method (20) according to any one of claims 1 to 6, wherein the classification step (23) comprises assigning (231), for each frame of the video sequence, one or more movement types selected from the predefined set, using a multi-label classification model.

8. The computer-implemented method (20) according to any one of claims 1 to 7, further comprising a step of storing (22), as historical data, a history of visual and/or motion features extracted from one or more earlier portions of the video sequence.

9. The computer-implemented method (20) according to claim 8, wherein the historical data are combined with the extracted data during the classification step (23).

10. An apparatus (10) for identifying at least one movement associated with at least one dynamic element appearing in a video sequence, comprising:
- an extracting module (11) configured to extract data combining visual and motion features, wherein the motion features comprises pose data representing the positions of skeletal joints over time, and wherein said data is generated by projecting the motion features onto an orthogonal basis derived from the visual features and is associated with a temporal evolution of said at least one dynamic element in the video sequence; and
- a classifying module (12) configured to classify the at least one movement among a predefined set of movement types, based on said data.

11. A computer program set including instructions for executing the steps of the computer-implemented method (20) of any one of claims 1 to 9 when said program set is executed by at least one computer.

12. A recording medium readable by at least one computer and having recorded thereon at least one computer program including instructions for executing the steps of the computer-implemented method (20) of any one of claims 1 to 9.
